(19) Europäisches Patentamt
European Patent Office
Office européen des brevets

(11) **EP 4 722 162 A1**

(12) **EUROPEAN PATENT APPLICATION**
published in accordance with Art. 153(4) EPC

(43) Date of publication:
**08.04.2026 Bulletin 2026/15**

(51) International Patent Classification (IPC):
**C01G 53/00** (2025.01)   **H01M 4/505** (2010.01)
**H01M 4/525** (2010.01)

(21) Application number: 24814876.9

(52) Cooperative Patent Classification (CPC):
Y02E 60/10

(22) Date of filing: **16.02.2024**

(86) International application number:
**PCT/JP2024/005464**

(87) International publication number:
**WO 2024/247389 (05.12.2024 Gazette 2024/49)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.05.2023   JP 2023090171**

(71) Applicant: **SUMITOMO METAL MINING Co., Ltd. Tokyo 105-8716 (JP)**

(72) Inventor: **TACHIBANA Shingo Niihama-shi, Ehime 792-8521 (JP)**

(74) Representative: **Vossius & Partner Patentanwälte Rechtsanwälte mbB Siebertstrasse 3 81675 München (DE)**

(54) **LITHIUM METAL COMPOSITE OXIDE, POSITIVE ELECTRODE ACTIVE MATERIAL FOR LITHIUM SECONDARY BATTERY, POSITIVE ELECTRODE FOR LITHIUM SECONDARY BATTERY, AND LITHIUM SECONDARY BATTERY**

(57) A **lithium** metal composite oxide and the like capable of improving an initial charge and discharge efficiency are provided. In a curve, pores of the lithium metal composite oxide include first pores in which a pore size dp and a maximum pore size dpm satisfy a relationship represented by dp/dpm < 0.10, second pores in which the pore size dp and the maximum pore size dpm satisfy a relationship represented by $0.10 \leq dp/dpm \leq 0.65$, and third pores in which the pore size dp and the maximum pore size dpm satisfy a relationship represented by dp/dpm > 0.65. A volume V1 of the first pores, a volume V2 of the second pores, and a volume V3 of the third pores satisfy relationships represented by "0 < $100 \cdot V1/(V1 + V2 + V3) \leq 70$" and "0 < $100 \cdot V3/(V1 + V2 + V3) \leq 15$".

FIG. 1

**Description**

TECHNICAL FIELD

The present invention relates to a lithium metal composite oxide, a cathode active material for lithium secondary battery, a cathode for lithium secondary battery, and a lithium secondary battery.

BACKGROUND ART

In lithium secondary battery, a cathode is produced by using, for example, a cathode active material containing a lithium metal composite oxide.
In the related art, various lithium metal composite oxides have been proposed to improve the performance of the lithium secondary battery.

Citation List

Patent Document

Patent Document 1: Japanese Unexamined Patent Application, First Publication No. 2020-145189

SUMMARY OF INVENTION

Technical Problem

In the lithium secondary battery, an improvement in "initial charge and discharge efficiency" representing a proportion of a discharge capacity to a charge capacity in charge and discharge of a first cycle is required.
An object of the present invention is to provide a lithium metal composite oxide, a cathode active material for lithium secondary battery, a cathode for lithium secondary battery, and a lithium secondary battery capable of improving the initial charge and discharge efficiency.

Solution to Problem

The present invention has the following aspects.

[1] A lithium metal composite oxide containing:

Li;
Ni; and
an element M,
in which the element M is at least one element selected from the group consisting of Co, Mn, Fe, Cu, Ti, Mg, Ca, Al, Zn, Sn, Zr, B, Si, Nb, W, Ta, Ba, S and P,
the lithium metal composite oxide has pores, and
in a curve calculated by a Barrett-Joyner-Halenda method from a nitrogen-adsorption isotherm, in which a horizontal axis represents a ratio $dp/dpm$ of a pore size $dp$ to a maximum pore size $dpm$ and a vertical axis represents a cumulative pore volume,
the pores include first pores satisfying a relationship represented by $dp/dpm < 0.10$, second pores satisfying a relationship represented by $0.10 \leq dp/dpm \leq 0.65$, and third pores satisfying a relationship represented by $dp/dpm > 0.65$, and
a volume $V1$ of the first pores, a volume $V2$ of the second pores, and a volume $V3$ of the third pores satisfy relationships represented by (Expression A1) and (Expression A2),

$$0 < 100 \cdot V1/(V1 + V2 + V3) \leq 70 \dots \text{(Expression A1),}$$

$$0 < 100 \cdot V3/(V1 + V2 + V3) \leq 15 \dots \text{(Expression A2).}$$

[2] The lithium metal composite oxide according to [1],

in which the lithium metal composite oxide is represented by (Compositional Formula I),

in (Compositional Formula I),

M1 is at least one element selected from the group consisting of Mn, Al, and Co,

M2 is at least one element selected from the group consisting of Fe, Cu, Ti, Mg, Ca, Zn, Sn, Zr, B, Si, Nb, W, Ta, Ba, S, and P, and

relationships represented by (Expression Ia) to (Expression Id) are satisfied,

$$Li[Li_\alpha(Ni_{(1-x-y)}M1_xM2_y)_{1-\alpha}]O_2 \ldots \qquad \text{(Compositional Formula I)},$$

$$-0.1 \leq \alpha \leq 0.2 \ldots \text{(Expression Ia)},$$

$$0 \leq x \leq 0.5 \ldots \text{(Expression Ib)},$$

$$0 \leq y \leq 0.7 \ldots \text{(Expression Ic)},$$

$$0 < x + y < 1 \ldots \text{(Expression Id)}.$$

[3] The lithium metal composite oxide according to [1] or [2],

in which a substance amount of Co with respect to the total amount of Ni and the element M is 10% by mole or less.

[4] The lithium metal composite oxide according to [2],

in which, in (Compositional Formula I), a relationship represented by (Expression Id_1) is satisfied,

$$0 < x + y \leq 0.15 \ldots \text{(Expression Id\_1)}.$$

[5] The lithium metal composite oxide according to any one of [1] to [4],

in which, in a pore size distribution calculated by the Barrett-Joyner-Halenda method from the nitrogen-adsorption isotherm, an average pore size Adp satisfies the relationship represented by (Expression B),

$$10 \, \text{nm} \leq Adp \leq 40 \, \text{nm} \ldots \text{(Expression B)}.$$

[6] The lithium metal composite oxide according to any one of [1] to [5],

in which, in a pore size distribution calculated by the Barrett-Joyner-Halenda method from the nitrogen-adsorption isotherm, a pore volume VP satisfies the relationship represented by (Expression C),

$$0.001 \, \text{cm}^3/\text{g} \leq VP \leq 0.01 \, \text{cm}^3/\text{g} \ldots \text{(Expression C)}.$$

[7] The lithium metal composite oxide according to any one of [1] to [6],

in which a metal site occupancy factor SR obtained from Rietveld analysis satisfies the relationship represented by (Expression D),

$$1.0\% \leq SR \leq 4.0\% \ldots \text{(Expression D)}.$$

[8] The lithium metal composite oxide according to any one of [1] to [7],

in which an average crystallite size AK obtained from Rietveld analysis satisfies the relationship represented by (Expression E),

$$80 \, \text{nm} \leq AK \leq 200 \, \text{nm} \ldots \text{(Expression E)}.$$

[9] The lithium metal composite oxide according to any one of [1] to [8],

in which a BET specific surface area BS satisfies the relationship represented by (Expression F),

$$0.2 \ \mathrm{m}^2/\mathrm{g} \leq \mathrm{BS} \leq 2.0 \ \mathrm{m}^2/\mathrm{g} \ ... \ (\text{Expression F}).$$

[10] A cathode active material for lithium secondary battery, containing:
the lithium metal composite oxide according to any one of [1] to [9].
[11] A cathode for lithium secondary battery, containing:
the cathode active material for lithium secondary battery according to [10].
[12] A lithium secondary battery including:
the cathode for lithium secondary battery according to [11].

Advantageous Effects of Invention

According to the present invention, it is possible to provide a lithium metal composite oxide, a cathode active material for lithium secondary battery, a cathode for lithium secondary battery, and a lithium secondary battery capable of improving the initial charge and discharge efficiency.

BRIEF DESCRIPTION OF DRAWINGS

[FIG. 1] A diagram showing an example of a curve A of a lithium metal composite oxide, which will be described later, in the embodiment.
[FIG. 2] A schematic view showing an example of a lithium secondary battery.
[FIG. 3] A schematic view showing an example of an all-solid-state lithium secondary battery.

DESCRIPTION OF EMBODIMENTS

Hereinafter, an example of the embodiment of the present invention will be described.
In the present specification, an abbreviation "MCC" is used for representing a metal composite compound. An abbreviation "LiMO" is used for representing a lithium metal composite oxide. An abbreviation "CAM" is used for representing a cathode active material for lithium secondary battery. In addition, "Ni" and "Li" indicate a nickel element and a lithium element, not a nickel metal single substance and a lithium metal single substance. The same applies to notations of other elements such as Co and Mn. Regarding a numerical range, for example, in a case of describing "5 to 15 $\mu$m", it means a range from 5 $\mu$m to 15 $\mu$m, and means a numerical range including the lower limit value of 5 $\mu$m and the upper limit value of 15 $\mu$m. Furthermore, numerical ranges of the respective physical properties, compositions, manufacturing conditions, and the like can be optionally combined. A lithium secondary battery means a battery in which an electrolyte (a non-aqueous electrolyte, a solid electrolyte, or the like) is disposed between a cathode and an anode, and charging and discharging are performed by lithium ions moving between the cathode and the anode through the electrolyte.

[A] LiMO

[A-1] Crystal structure

In the present embodiment, the LiMO is a substance used as the CAM. From the viewpoint of improving an initial charge and discharge efficiency, the LiMO preferably has a layered structure.
The crystal structure of the LiMO is more preferably a hexagonal crystal structure or a monoclinic crystal structure. The hexagonal crystal structure belongs to one space group selected from the group consisting of P3, $P3_1$, $P3_2$, R3, P-3, R-3, P312, P321, $P3_1$12, $P3_1$21, $P3_2$12, $P3_2$21, R32, P3m1, P31m, P3c1, P31c, R3m, R3c, P-31m, P-31c, P-3m1, P-3c1, R-3m, R-3c, P6, $P6_1$, $P6_5$, $P6_2$, $P6_4$, $P6_3$, P-6, P6/m, $P6_3$/m, P622, $P6_1$22, $P6_5$22, $P6_2$22, $P6_4$22, $P6_3$22, P6mm, P6cc, $P6_3$cm, $P6_3$mc, P-6m2, P-6c2, P-62m, P-62c, P6/mmm, P6/mcc, $P6_3$/mcm, and $P6_3$/mmc. In addition, the monoclinic crystal structure belongs to one space group selected from the group consisting of P2, $P2_1$, C2, Pm, Pc, Cm, Cc, P2/m, $P2_1$/m, C2/m, P2/c, $P2_1$/c, and C2/c. Among the above, in order to obtain a lithium secondary battery having a high discharge capacity, the crystal structure of the LiMO is still more preferably a hexagonal crystal structure belonging to a space group R-3m or a monoclinic crystal structure belonging to C2/m.
The crystal structure of the LiMO can be confirmed by observing the LiMO using a powder X-ray diffraction measuring device. As the powder X-ray diffraction measurement, an X-ray diffractometer, for example, Ultima IV manufactured by Rigaku Corporation can be used.

[A-2] Composition

A composition of the LiMO includes at least Li, Ni, and an element M.

The element M is at least one element selected from the group consisting of Co, Mn, Fe, Cu, Ti, Mg, Ca, Al, Zn, Sn, Zr, B, Si, Nb, W, Ta, Ba, S, and P.

It is preferable that the LiMO contains Li, Ni, and at least one element M1 selected from the group consisting of Co, Mn, and Al.

The LiMO is preferably represented by (Compositional Formula I).

$$Li[Li_{\alpha}(Ni_{(1-x-y)}M1_xM2_y)_{1-\alpha}]O_2 \ldots \qquad \text{(Compositional Formula I)}$$

In (Compositional Formula I), M1 is at least one element selected from the group consisting of Mn, Al, and Co. M2 is at least one element selected from the group consisting of Fe, Cu, Ti, Mg, Ca, Zn, Sn, Zr, B, Si, Nb, W, Ta, Ba, S, and P.

In (Compositional Formula I), it is preferable that $\alpha$, x, and y satisfy relationships represented by (Expression Ia) to (Expression Id).

$$-0.1 \leq \alpha \leq 0.2 \ldots \text{(Expression Ia)}$$

$$0 \leq x \leq 0.5 \ldots \text{(Expression Ib)}$$

$$0 \leq y \leq 0.7 \ldots \text{(Expression Ic)}$$

$$0 < x + y < 1 \ldots \text{(Expression Id)}$$

In (Compositional Formula I), by setting the value of $\alpha$ to be equal to or larger than the lower limit value in the range shown in (Expression Ia), it is possible to reduce the internal resistance of the lithium secondary battery, and to increase the capacity and improve the rate performance. In addition, in (Compositional Formula 1), by setting the value of $\alpha$ to be equal to or smaller than the upper limit value in the range shown in (Expression Ia), it is possible to suppress generation of a by-product containing Li, suppress a reaction between the by-product containing Li and the electrolytic solution, and improve the initial charge and discharge efficiency. In addition, in (Compositional Formula I), $\alpha$ is more preferably -0.03 or more, and still more preferably -0.02 or more. Furthermore, $\alpha$ is more preferably 0.1 or less, and still more preferably 0.07 or less. The range of $\alpha$ is more preferably $-0.03 \leq \alpha \leq 0.1$, and still more preferably $-0.02 \leq \alpha \leq 0.07$.

In (Compositional Formula I), in a case where the value of x satisfies the relationship represented by (Expression Ib), an internal resistance of the lithium secondary battery can be reduced, and thus it is possible to extend the life and to improve the initial charge and discharge efficiency and the rate performance. In addition, in (Compositional Formula I), x is more preferably 0.01 or more, and still more preferably 0.02 or more. Furthermore, x is more preferably 0.4 or less, and still more preferably 0.3 or less. The range of x is more preferably $0.01 \leq x \leq 0.4$, and still more preferably $0.02 \leq x \leq 0.3$.

In (Compositional Formula I), in a case where the value of y satisfies the relationship represented by (Expression Ic), a cycle retention rate of the lithium secondary battery can be improved. In addition, in a case where the LiMO contains the M2, in (Compositional Formula I), y is more preferably 0.0002 or more, and still more preferably 0.0005 or more. Furthermore, y is more preferably 0.6 or less, and still more preferably 0.5 or less. The range of y is more preferably $0 \leq y \leq 0.6$, still more preferably $0.0002 \leq y \leq 0.6$, and particularly preferably $0.0005 \leq y \leq 0.5$.

In (Compositional Formula I), in a case where the adding value (x + y) of the value of x and the value of y satisfies the relationship represented by the (expression Id), an initial capacity of the lithium secondary battery and the initial charge and discharge efficiency can be improved. In addition, in (Compositional Formula I), (x + y) is more preferably less than 0.6, still more preferably 0.3 or less, and particularly preferably 0.15 or less. (x + y) is more preferably 0.01 or more. Examples of the range of (x + y) include $0.01 \leq x + y < 0.6$, $0.01 \leq x + y \leq 0.3$, and $0.01 \leq x + y \leq 0.15$; and particularly, by satisfying a relationship represented by (Expression Id_1), the initial charge and discharge efficiency can be improved.

$$0 < x + y \leq 0.15 \ldots \text{(Expression Id\_1)}$$

The M2 is preferably at least one element selected from the group consisting of Ti, Mg, Zr, B, Nb, and W.

In the LiMO, a substance amount of Co with respect to the total amount of Ni and the element M is preferably 10% by mole or less, more preferably 5% by mole or less, still more preferably 3% by mole or less, particularly preferably 1% by mole or less, and may be 0%. In a case where the LiMO is represented by (Compositional Formula I), the above-described substance amount of Co can be calculated by Expression (II) using a substance amount [Ni] of Ni, a substance amount [M1] of M1, a substance amount [M2] of M2, and a substance amount [Co] of Co. In a case where the above-described substance amount of Co is within the above-described range, an operating voltage of the lithium secondary battery is less likely to increase, and an electrolytic solution is less likely to be decomposed on a surface of the LiMO, so that it is possible to further improve the initial charge and discharge efficiency.

$$100 \cdot [Co]/([Ni] + [M1] + [M2]) \ ... \ (\text{Expression II})$$

(Method of measuring composition)

The composition of the LiMO is measured by, for example, using an ICP emission spectrometer (Optima 7300 (manufactured by PerkinElmer, Inc.) or the like). Before the composition is measured, a treatment of dissolving the sample in an acid or an alkali is performed according to the measurement element.

[A-3] Regarding pores of LiMO

The LiMO has pores. In addition, the LiMO is a powder. The LiMO may be composed of only secondary particles in which primary particles are aggregated, or may be a mixture of the primary particles and the secondary particles. For example, the LiMO may contain a plurality of primary particles and secondary particles in which the plurality of primary particles are aggregated.
The above-described "primary particles" are particles in which grain boundaries are not present in appearance in a case where the LiMO is observed with a microscope (such as a scanning electron microscope) in a field of view of 1,000 times to 30,000 times. The above-described "secondary particles" are aggregates of the primary particles.

(Method of measuring pore volume fraction)

For the pore of the LiMO, a pore size distribution is obtained by a Barrett-Joyner-Halenda method (BJH method) from a nitrogen-adsorption isotherm, and a curve A in which the horizontal axis represents a ratio dp/dpm of a pore size dp to a maximum pore size dpm and the vertical axis represents a cumulative pore volume is obtained.
The nitrogen-adsorption isotherm is obtained by performing a vacuum degassing treatment on a sample of 10 g of the LiMO using a vacuum heating treatment device (for example, BELSORP-vacII (manufactured by MicrotracBel Corp.)), and then measuring the sample at a liquid nitrogen temperature (temperature: 77 K) using a measuring device for an adsorption isotherm (for example, BELSORP-mini (manufactured by MicrotracBel Corp.)). In the nitrogen-adsorption isotherm, the amount of nitrogen adsorbed per unit weight of the LiMO is expressed in a volume of gaseous nitrogen at a standard state (Standard Temperature and Pressure; STP). From the pore size distribution obtained by analyzing the nitrogen-adsorption isotherm with the BJH method, the pore size (pore diameter) dp of the pore, and an average pore size Adp and a pore volume VP, which will be described later, are obtained. The BJH method is a method of performing analysis by assuming that the shape of the pore is cylindrical and using a relationship expression (Kelvin equation) between a pore size at which capillary condensation occurs and a relative pressure of nitrogen, and is used for evaluation of pores (mesopores and the like) having a pore size dp of approximately 2 to 200 nm.

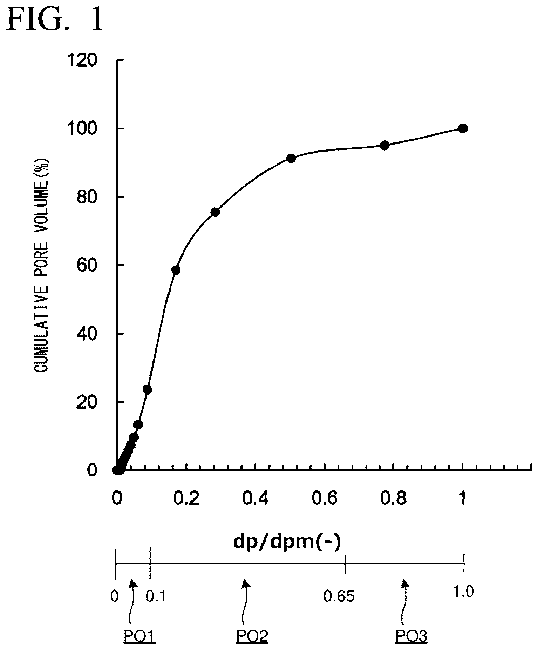

FIG. 1 is a diagram showing an example of the curve A of the LiMO.
In FIG. 1, the horizontal axis represents a value (dp/dpm) obtained by dividing the pore size dp by the maximum pore size dpm, and the vertical axis represents a percentage (%) of the cumulative pore volume obtained by sequentially cumulating the pore volume at each pore size.
As shown in FIG. 1, the pores of the LiMO are classified into first pores (PO1), second pores (PO2), and third pores (PO3) on the curve A. Here, in the PO1, the dp and the dpm satisfy a relationship of dp/dpm < 0.10. In the PO2, the dp and the dpm satisfy a relationship of $0.10 \leq$ dp/dpm $\leq 0.65$. In the PO3, the dp and the dpm satisfy a relationship of dp/dpm > 0.65.

(Pore volume fraction)

In the LiMO, a volume V1 of the PO1, a volume V2 of the PO2, and a volume V3 of the PO3 satisfy relationships represented by (Expression A1) and (Expression A2).

$$0 < 100 \cdot V1/(V1 + V2 + V3) \leq 70 \ ... \ (\text{Expression A1})$$

$$0 < 100 \cdot V3/(V1 + V2 + V3) \leq 15 \dots \text{(Expression A2)}$$

In a case where the LiMO is used as the CAM in the lithium secondary battery, the PO1 is not easily impregnated with the electrolytic solution. On the other hand, the PO3 having a larger dp than the PO1 is easily impregnated with the electrolytic solution, but the surface area is smaller, so that the reaction field in the lithium secondary battery is likely to be reduced. However, in the LiMO, the proportion of the volume V1 of the PO1 to the volume (V1 + V2 + V3) of all the pores satisfies (Expression A1). Furthermore, in the LiMO, the proportion of the volume V3 of the PO3 to the volume (V1 + V2 + V3) of all the pores satisfies the relationship shown in (Expression A2). Therefore, in the LiMO, a balance between the impregnation with the electrolytic solution and the formation of the reaction field is favorable, and thus the initial charge and discharge efficiency of the lithium secondary battery can be improved.

From the viewpoint of the initial charge and discharge efficiency, $100 \cdot V1/(V1 + V2 + V3)$ is more preferably 50 or less, still more preferably 40 or less, and particularly preferably 30 or less. The range of $100 \cdot V1/(V1 + V2 + V3)$ is more preferably $0 < 100 \cdot V1/(V1 + V2 + V3) \leq 50$, still more preferably $0 < 100 \cdot V1/(V1 + V2 + V3) \leq 40$, and particularly preferably $0 < 100 \cdot V1/(V1 + V2 + V3) \leq 30$.

From the viewpoint of the initial charge and discharge efficiency, $100 \cdot V3/(V1 + V2 + V3)$ is more preferably 14 or less, still more preferably 13 or less, and particularly preferably 12 or less. The range of $100 \cdot V3/(V1 + V2 + V3)$ is more preferably $0 < 100 \cdot V3/(V1 + V2 + V3) \leq 14$, still more preferably $0 < 100 \cdot V3/(V1 + V2 + V3) \leq 13$, and particularly preferably $0 < 100 \cdot V3/(V1 + V2 + V3) \leq 12$.

(Average pore size Adp)

It is preferable that an average pore size Adp of the LiMO satisfies the relationship represented by (Expression B).

$$10 \, \text{nm} \leq \text{Adp} \leq 40 \, \text{nm} \dots \text{(Expression B)}$$

The LiMO satisfying (Expression B) has a large number of pores having a favorable balance between the impregnability of the electrolytic solution and the formation of the reaction field. Therefore, the LiMO can further improve the initial charge and discharge efficiency of the lithium secondary battery.

The Adp is more preferably 35 nm or less, still more preferably 30 nm or less, and particularly preferably 27 nm or less. In addition, the Adp is more preferably 15 nm or more, and still more preferably 20 nm or more. The range of Adp is more preferably $15 \, \text{nm} \leq \text{Adp} \leq 35 \, \text{nm}$, still more preferably $20 \, \text{nm} \leq \text{Adp} \leq 30 \, \text{nm}$, and particularly preferably $20 \, \text{nm} \leq \text{Adp} \leq 27 \, \text{nm}$.

(Pore volume VP)

It is preferable that a pore volume VP of the LiMO satisfies the relationship represented by (Expression C). The VP is a pore volume at a pore size of 2 to 200 nm in the pore size distribution.

$$0.001 \, \text{cm}^3/\text{g} \leq \text{VP} \leq 0.01 \, \text{cm}^3/\text{g} \dots \text{(Expression C)}$$

The LiMO satisfying Expression (C) has a sufficient pore volume, and sufficient pores having a favorable balance between the impregnability of the electrolytic solution and the formation of the reaction field are present. Therefore, the LiMO can further improve the initial charge and discharge efficiency of the lithium secondary battery.

The VP is more preferably $0.0095 \, \text{cm}^3/\text{g}$ or less, and still more preferably $0.0090 \, \text{cm}^3/\text{g}$ or less. In addition, the VP is more preferably $0.002 \, \text{cm}^3/\text{g}$ or more, and still more preferably $0.004 \, \text{cm}^3/\text{g}$ or more. The range of VP is more preferably $0.002 \, \text{cm}^3/\text{g} \leq \text{VP} \leq 0.0095 \, \text{cm}^3/\text{g}$ and still more preferably $0.004 \, \text{cm}^3/\text{g} \leq \text{Vp} \leq 0.0090 \, \text{cm}^3/\text{g}$.

[A-4] Other characteristics

(Metal site occupancy factor SR)

It is preferable that a metal site occupancy factor SR of the LiMO satisfies a relationship represented by (Expression D).

$$1.0\% \leq \text{SR} \leq 4.0\% \dots \text{(Expression D)}$$

The SR is a proportion of Ni and the element M present in an Li layer (Li site) constituting the LiMO having a layered structure. In a case where the SR is equal to or less than the above-described upper limit value, diffusion resistance in a solid phase is less likely to increase in the lithium secondary battery, and thus the initial charge and discharge efficiency can be further suppressed. In a case where the SR is equal to or more than the above-described lower limit value, the rate of change in volume in the lithium secondary battery is less likely to increase, and thus the lithium secondary battery is less likely to be damaged or the like.

The SR is more preferably 3.7% or less, and still more preferably 3.5% or less. In addition, the SR is more preferably 1.1% or more, and still more preferably 1.2% or more. The range of SR is more preferably $1.1\% \leq SR \leq 3.7\%$, and still more preferably $1.2\% \leq SR \leq 3.5\%$.

(Average crystallite size AK)

It is preferable that an average crystallite size AK of the LiMO satisfies a relationship represented by (Expression E).

$$80\ \text{nm} \leq AK \leq 200\ \text{nm} \ ... \ (\text{Expression E})$$

In a case where the AK is within the above-described range, the crystal of the LiMO appropriately and sufficiently grows, and thus the increase in resistance of the lithium secondary battery is suppressed and the initial charge and discharge efficiency can be further improved.

The AK is more preferably 170 nm or less, still more preferably 150 nm or less, and particularly preferably 130 nm or less. In addition, the AK is more preferably 90 nm or more, still more preferably 100 nm or more, and particularly preferably 105 nm or more. The range of AK is more preferably $90\ \text{nm} \leq AK \leq 170\ \text{nm}$, still more preferably $100\ \text{nm} \leq AK \leq 150\ \text{nm}$, and particularly preferably $105\ \text{nm} \leq AK \leq 130\ \text{nm}$.

(Method of measuring metal site occupancy factor and average crystallite size)

The SR and the AK are calculated by performing Rietveld analysis on a powder X-ray diffraction pattern obtained by a powder X-ray diffraction measurement. The Rietveld analysis is a method for comparing a measured powder X-ray diffraction pattern with a simulation pattern obtained from a crystal structure model and optimizing a crystal structure parameter in the crystal structure model such that a difference between the measured powder X-ray diffraction pattern and the simulation pattern is minimized. The powder X-ray diffraction measurement is performed using an X-ray diffractometer. As the X-ray diffractometer, for example, D8 Advance (manufactured by Bruker) can be used. Specifically, the powder of the LiMO is loaded into a dedicated substrate, and a powder X-ray diffraction pattern is obtained by measuring the powder under the conditions of a diffraction angle $2\theta = 10°$ to $90°$ and a sampling width of $0.02°$ using a CuKα ray source. The obtained powder X-ray diffraction pattern is subjected to the Rietveld analysis. As Rietveld analysis software, TOPAS ver. 4.2 manufactured by Bruker is used. In this case, the metal site occupancy factor n in the Li site is optimized by using a layered rock-salt crystal structure $(Li_{1-n}Me_n)(Me_{1-n}Li_n)O_2$ as an initial crystal structure model. The SR and the AK can be calculated by the above method.

(BET specific surface area BS)

It is preferable that a BET specific surface area BS of the LiMO satisfies a relationship represented by (Expression F).

$$0.2\ \text{m}^2/\text{g} \leq BS \leq 2.0\ \text{m}^2/\text{g} \ ... \ (\text{Expression F})$$

In a case where the BS is equal to or less than the above-described upper limit value, the electrolytic solution is less likely to be decomposed on the surface of the LiMO in the lithium secondary battery. In a case where the BS is equal to or more than the above-described lower limit value, the reaction field in the lithium secondary battery is less likely to decrease, and thus the resistance of the lithium secondary battery can be reduced and the initial charge and discharge efficiency can be further improved.

The BS is more preferably 1.9 m²/g or less, still more preferably 1.8 m²/g or less, and particularly preferably 1.5 m²/g or less. In addition, the BS is more preferably 0.4 m²/g or more, still more preferably 0.6 m²/g or more, and particularly preferably 0.8 m²/g or more. The range of BS is more preferably $0.4\ \text{m}^2/\text{g} \leq BS \leq 1.9\ \text{m}^2/\text{g}$, still more preferably $0.6\ \text{m}^2/\text{g} \leq BS \leq 1.8\ \text{m}^2/\text{g}$, and particularly preferably $0.8\ \text{m}^2/\text{g} \leq BS \leq 1.5\ \text{m}^2/\text{g}$.

(Method of measuring BET specific surface area)

The BS is a value which is measured by the Brunauer-Emmett-Teller (BET) method. In the measurement of the BS, a nitrogen gas is used as an adsorbed gas. The BS (unit: $m^2/g$) is measured, for example, by drying 1 g of the LiMO or a primary calcined product described later at a temperature condition of 105°C for 30 minutes in a nitrogen atmosphere, and then performing measurement using a BET specific surface area meter (for example, Macsorb (manufactured by MOUNTECH Co., Ltd.)).

[B] Method for producing LiMO

A method for producing the LiMO will be described.
In a case of producing the LiMO, a mixing step and a calcining step are sequentially performed.

[B-1] Mixing step

In the mixing step, a mixture containing MCC which is a precursor of the LiMO and a lithium compound is prepared.

[B-1-1] MCC

The MCC is a substance containing Ni and the element M constituting the LiMO, and is, for example, a metal composite hydroxide, a metal composite oxide, or a mixture thereof.
The metal composite hydroxide used as the MCC is produced, for example, by a known batch co-precipitation method or a continuous co-precipitation method.
Hereinafter, the method of producing the metal composite hydroxide containing Ni and the element M will be described in detail using the metal composite hydroxide as an example.
Specifically, a nickel salt solution and a metal salt solution of the element M are reacted with each other by a continuous co-precipitation method described in JP-A-2002-201028. As a result, the metal composite hydroxide containing Ni and the element M ($Ni_{(1-a)}M_a(OH)_2$ ($0 < a < 1$)) is produced.
A nickel salt, which is a solute of the nickel salt solution, is, for example, at least one of nickel sulfate, nickel nitrate, nickel chloride, or nickel acetate.
A metal salt of the element M, which is a solute of the metal salt solution of the element M, is, for example, at least one of cobalt sulfate, cobalt nitrate, cobalt chloride, cobalt acetate, manganese sulfate, manganese nitrate, manganese chloride, manganese acetate, aluminum sulfate, aluminum nitrate, aluminum chloride, or aluminum acetate.
The nickel salt and the metal salt of the element M are mixed in a proportion corresponding to ($Ni_{(1-a)}M_a(OH)_2$) in the nickel salt solution and the metal salt solution of the element M. Water is used as a solvent for these solutions.
In the production step of the metal composite hydroxide, a complexing agent may be used. In this case, a mole ratio of the amount of the complexing agent to the total number of moles of the nickel salt and the metal salt of the element M is more than 0 and 2 or less.
The complexing agent is a material capable of forming a complex with nickel ions and ions of the element M in an aqueous solution. The complexing agent is, for example, at least one of ammonium ion donors (ammonium hydroxide, ammonium sulfate, ammonium chloride, ammonium carbonate, ammonium fluoride, or the like), hydrazine, ethylenediaminetetraacetic acid, nitrilotriacetic acid, uracildiacetic acid, or glycine.
An aqueous solution of an alkali metal hydroxide is added to the mixed solution containing the nickel salt solution, the metal salt solution of the element M, and the optional complexing agent, before the pH of the mixed solution changes from alkaline to neutral. The alkali metal hydroxide is, for example, sodium hydroxide or potassium hydroxide.
The pH value of the mixed solution is measured at a temperature of 40°C of the mixed solution. In a case where the temperature of the mixed solution sampled in the reaction vessel is not 40°C, the mixed solution is heated or cooled to 40°C, and then the pH is measured.
The temperature of the reaction vessel is controlled, for example, in a range of 20°C to 80°C, preferably in a range of 30°C to 70°C.
In addition, in the reaction, the pH value of the mixed solution in the reaction vessel is controlled, for example, in a range of 9 to 13.
A reaction precipitate formed in the reaction vessel is neutralized in a state of being stirred. A time for neutralizing the reaction precipitate is, for example, in a range of 1 to 20 hours.
As the reaction vessel used in the continuous co-precipitation method, a reaction vessel of a type in which an overflow occurs can be used in order to separate the formed reaction precipitate.
In a case of producing the metal composite hydroxide by a batch co-precipitation method, a reaction vessel which does not include an overflow pipe, a device that has a mechanism for concentrating the overflowed reaction precipitate in a concentrating tank connected to the overflow pipe and circulating it back to the reaction vessel, or the like is used.

Here, various gases (for example, an inert gas such as nitrogen, argon, and carbon dioxide, an oxidizing gas such as an air and oxygen, or a mixed gas thereof) may be supplied into the reaction vessel.

After the above-described reaction is completed, the obtained reaction precipitate is isolated. The isolation is performed, for example, by a method of dewatering a slurry containing the reaction precipitate by centrifugal separation, suction filtration, or the like. In addition, the reaction precipitate may be washed before the isolation.

The isolated reaction precipitate is dried and sieved as necessary to obtain the metal composite hydroxide.

The reaction precipitate is preferably washed with water or an alkaline washing liquid. In the washing of the reaction precipitate, an alkaline washing liquid is preferably used, and in particular, a sodium hydroxide aqueous solution is preferably used. In addition, the washing may be performed using a washing liquid containing a sulfur element. The washing liquid containing a sulfur element is, for example, an aqueous solution of a sulfate of potassium or sodium.

In the above-described example, the metal composite hydroxide is produced as the MCC, but the metal composite oxide may be prepared.

The metal composite oxide is produced, for example, by oxidizing the metal composite hydroxide (oxidation step). The oxidation step may be performed a plurality of times as necessary. In a case of performing a plurality of oxidation steps, an oxidation temperature means a temperature of a step of performing the oxidation at the highest temperature among the plurality of oxidation steps.

The oxidation temperature is preferably in a range of 400°C to 700°C and more preferably in a range of 450°C to 680°C. The oxidation temperature means a set temperature of a device used for the oxidation.

A time for which the oxidation temperature is maintained in the oxidation step is preferably in a range of 0.1 to 20 hours and more preferably in a range of 0.5 to 10 hours. The temperature rising rate at which the temperature is raised to the above-described oxidation temperature is, for example, in a range of 50 to 400 °C/hour. In addition, the oxidation step is performed, for example, in an atmosphere including air, oxygen, nitrogen, argon, or a mixed gas thereof.

The inside of the device used for the oxidation may be in an oxygen-containing atmosphere which appropriately contains oxygen. The oxygen-containing atmosphere may be a mixed gas atmosphere of an inert gas and oxygen, or may be a state in which an oxidizing agent is present in an inert gas atmosphere.

In the oxygen-containing atmosphere, it is sufficient that a sufficient amount of oxygen atoms for oxidizing the transition metal is present.

In a case where the oxygen-containing atmosphere is a mixed gas atmosphere of an inert gas and oxygen, the atmosphere in the device is controlled by a method of allowing the oxygen to pass through the device, a method of bubbling the oxygen in the mixed solution, or the like.

The oxidizing agent is a peroxide such as hydrogen peroxide, a peroxide salt such as permanganate, perchloric acid, hypochlorous acid, nitric acid, halogen, ozone, or the like.

[B-1-2] Lithium compound

The lithium compound used in the production of the LiMO is, for example, at least one of lithium carbonate, lithium nitrate, lithium acetate, lithium hydroxide, lithium hydroxide hydrate, lithium oxide, lithium chloride, or lithium fluoride. Among the above, it is preferable to use at least one of lithium hydroxide, lithium hydroxide monohydrate, or lithium carbonate as the lithium compound.

The lithium compound and the MCC are mixed in consideration of a compositional ratio of a final target product to obtain the mixture of the lithium compound and the MCC. The amount (mole ratio) of Li contained in the lithium compound with respect to the total amount of 1 of elements (Ni and the element M) other than the oxygen atom, contained in the MCC, is preferably 0.90 to 1.10, more preferably 0.95 to 1.10, and still more preferably 0.98 to 1.07.

[B-2] Calcining step

In the calcining step, a calcined product is produced by calcining the mixture prepared in the mixing step.

In the calcining step, it is preferable to sequentially perform primary calcining and secondary calcining.

The primary calcining is performed under, for example, the following firing conditions.

· Primary calcining temperature (retention temperature): 500°C to 900°C
· Primary calcining time (retention time): 1 to 50 hours

The primary calcining temperature is more preferably 550°C to 850°C and still more preferably 600°C to 700°C. When the primary calcining temperature is equal to or higher than the lower limit value of the above-described range, LiMO having a firm crystal structure can be obtained. In addition, when the primary calcining temperature is equal to or lower than the upper limit value of the above-described range, volatilization of lithium ions on the particle surface of the LiMO can be reduced. The primary calcining temperature or a secondary calcining temperature described later means a set temperature of a calcining device. In a case where the primary calcining or the secondary calcining is performed a plurality of times, the primary calcining temperature or the secondary calcining temperature means the temperature of a stage calcined at the highest temperature among a plurality of primary calcining stages or secondary calcining stages.

The primary calcining is performed in an atmosphere including air, oxygen, nitrogen, argon, a mixed gas thereof, or the like, depending on the composition. The primary calcining is preferably performed in an oxygen atmosphere.

The secondary calcining is performed under, for example, the following firing conditions.

· Temperature rising rate of secondary calcining: 80 °C/hour or more
· Secondary calcining temperature (retention temperature): 600°C to 900°C
· Secondary calcining time (retention time): 1 to 50 hours

Here, the secondary calcining is performed in a state of supplying an oxygen gas. Specifically, the secondary calcining is performed such that a BET specific surface area FS1 of a powder of the primary calcined product obtained by the primary calcining and an oxygen flow rate FS2 during the secondary calcining (during temperature rising and retention) satisfy a relationship represented by (Expression X).

$$1.0 \text{ (m)} \leq FS2/FS1 \leq 11.0 \text{ (m)} \dots \text{(Expression X)}$$

FS2/FS1 is more preferably 1.5 to 10.5 m, still more preferably 2.0 to 10.0 m, and particularly preferably 2.5 to 9.5 m. In a case where FS2/FS1 is equal to or larger than the above-described lower limit value, a sufficient amount of oxygen flows during the secondary calcining with respect to the BET specific surface area of the primary calcined product, and thus the sintering proceeds easily in an appropriate range. In a case where FS2/FS1 is equal to or smaller than the above-described upper limit value, the sintering can be performed to an extent that the pores having an appropriate size do not decrease excessively.

By satisfying the relationship represented by (Expression X), the LiMO satisfying the relationships represented by (Expression A1) and (Expression A2) can be efficiently produced. In addition, the Adp, VP, SR, AK, and BS of the LiMO can be adjusted to the above-described ranges.

The FS2 is preferably 0.1 to 10 L/min.

The primary calcining and the secondary calcining are performed using a calcining device such as a continuous static calcining furnace or a fluidized calcining furnace. The continuous static calcining furnace is, for example, a tunnel furnace or a roller hearth kiln. The fluidized calcining furnace is, for example, a rotary kiln.

The primary calcining or the secondary calcining may be performed in the presence of an inert melting agent. The inert melting agent is added to the extent that the initial capacity of the battery using the LiMO is not impaired, and may remain in the calcined product. As the inert melting agent, for example, those described in WO2019/177032A1 can be used.

The temperature rising rate of the secondary calcining is more preferably 100 °C/hour or more, and still more preferably 150 °C/hour or more.

The secondary calcining temperature is set to a temperature higher than the primary calcining temperature. The secondary calcining temperature is more preferably 650°C to 850°C and still more preferably 700°C to 820°C. When the secondary calcining temperature is equal to or higher than the lower limit value of the above-described range, LiMO having a firm crystal structure can be obtained. In addition, excessive sintering can be suppressed.

The secondary calcining time is more preferably 2 to 20 hours. When the secondary calcining time is equal to or less than the upper limit value of the above-described range, volatilization of lithium ions is suppressed, and the deterioration of battery performance is suppressed. When the secondary calcining time is equal to or more than the lower limit value of the above-described range, the development of crystals is promoted, and the deterioration of battery performance is suppressed.

The calcined product may be appropriately crushed after the calcining step.

The calcined product obtained in the calcining step may be appropriately subjected to a post-treatment step and a drying step, and may be further crushed and sieved.

[B-3] Post-treatment step

In the post-treatment step, the calcined product obtained in the calcining step is subjected to a post-treatment. Examples of the post-treatment include a treatment of washing the calcined product with a washing liquid such as water, ion-exchanged water, an alkaline aqueous solution, and a sulfate aqueous solution to remove impurities. In this case, a slurry concentration is preferably 40% by mass or more. Examples of a washing time include 5 to 20 minutes. The slurry concentration (% by mass) means a proportion of the mass (WS) of the calcined product to the total mass (WS + WL) of the mass (WS) of the calcined product and the washing liquid (WL) (that is, 100 * WS/(WS + WL)).

Examples of a method for bringing the washing liquid and the calcined product into contact with each other in the washing step include a method in which the calcined product is poured into and stirred in each washing liquid; a method in which each washing liquid is applied as shower water to the calcined product; and a method in which the calcined product is poured into and stirred in a washing liquid, the calcined product is separated from the washing liquid, and each washing liquid is applied as shower water to the separated calcined product.

The temperature of the washing liquid used for the washing is preferably 15°C or lower, more preferably 10°C or lower, and still more preferably 8°C or lower. By controlling the temperature of the washing liquid within the above-described range, excessive elution of lithium ions from the crystal structure of the calcined product into the washing liquid during the washing can be suppressed.

[B-4] Drying step

In the drying step, the calcined product subjected to the post-treatment in the post-treatment step is dried.

In the drying step, for example, the calcined product is dried at a temperature of 100°C to 400°C. The drying is performed by, for example, decompression drying, vacuum drying, blowing, heating, or a combination thereof.

The LiMO can be produced by the above-described steps.

[C] Battery evaluation

In a case of performing battery evaluation of the LiMO, the cathode is produced from the LiMO, and then the lithium secondary battery is produced using the produced cathode. Thereafter, as the battery evaluation, "initial charge and discharge efficiency" is measured for the produced lithium secondary battery.

[C-1] Production of cathode for lithium secondary battery

In a case of producing the cathode for lithium secondary battery, first, a paste-like cathode mixture is prepared. The cathode mixture is prepared by kneading a mixture of the LiMO, a conductive material, and a binder. Here, acetylene black is used as the conductive material, and PVdF is used as the binder. Each material is mixed at the following ratio. During the preparation of the cathode material mixture, N-methyl-2-pyrrolidone is used as an organic solvent.

· LiMO: 92 parts by mass
· Conductive material: 5 parts by mass
· Binder: 3 parts by mass

The paste-like cathode mixture prepared as described above is applied onto a collector (an aluminum foil having a thickness of 40 $\mu$m). Thereafter, the current collector coated with the cathode mixture is subjected to vacuum drying for 8 hours in an atmosphere at a temperature of 150°C to complete the cathode for lithium secondary battery. Here, an electrode area of the cathode for lithium secondary battery is 1.65 cm$^2$.

[C-2] Production of lithium secondary battery

In a case of producing the lithium secondary battery, first, the cathode produced as described above is placed on an upper surface of a lower lid of a part for a coin type battery CR2032 (manufactured by HOUSEN Co., Ltd.). In the installation on the lower lid, an aluminum foil surface of the cathode for lithium secondary battery is directed downward. A separator is installed on the upper surface of the lower lid on which the cathode is installed. As the separator, a polyethylene porous film having a thickness of 25 $\mu$m is used.

Next, 300 $\mu$l of an electrolytic solution is injected into the inside of the above-described part. Here, as the electrolytic solution, a solution in which 1% by volume of vinylene carbonate is added to a mixed solution in which each substance is mixed at the following proportion, and further, LiPF$_6$ is dissolved is used. The electrolytic solution is prepared such that a concentration of LiPF$_6$ was 1 mol/l.

· Ethylene carbonate: 30 parts by volume
· Dimethyl carbonate: 35 parts by volume
· Ethyl methyl carbonate: 35 parts by volume

Next, an anode is installed on the upper side of the separator. Here, metallic lithium is used as the anode. The upper lid is installed through a gasket, and the upper lid was crimped using a crimping machine. In this manner, a lithium secondary battery is completed.

[C-3] Measurement of initial charge and discharge efficiency

The lithium secondary battery produced as described above is allowed to stand at room temperature for 12 hours to sufficiently impregnate the separator and the cathode active material layer with the electrolytic solution, and then an initial charge and discharge test is performed under the following conditions to measure a charge capacity, and the obtained value is defined as "initial charge capacity" (mAh/g). The discharge capacity is further measured, and the obtained value is defined as the "initial discharge capacity" (mAh/g).

· Treatment temperature: 25°C
· Charging maximum voltage: 4.3 V, charging current: 0.1 CA, constant current constant voltage charging
· Discharging minimum voltage: 2.5 V; discharging current density: 0.1 CA; constant current discharging

The initial charge and discharge efficiency is calculated by the following expression using the value of the initial discharge capacity and the value of the initial charge capacity.
Initial charge and discharge efficiency (%) = Initial discharge capacity (mAh/g)/Initial charge capacity (mAh/g) $\times$ 100

[D] Lithium secondary battery

An example of a cathode for lithium secondary battery, which contains the LiMO according to the present embodiment as CAM, and a lithium secondary battery including the cathode for lithium secondary battery will be described. Hereinafter, the cathode for lithium secondary battery will be referred to as a cathode in some cases.
An example of the lithium secondary battery which is suitable in a case where the LiMO according to the present embodiment is used as the CAM has a cathode, an anode, a separator interposed between the cathode and the anode, and an electrolytic solution disposed between the cathode and the anode.

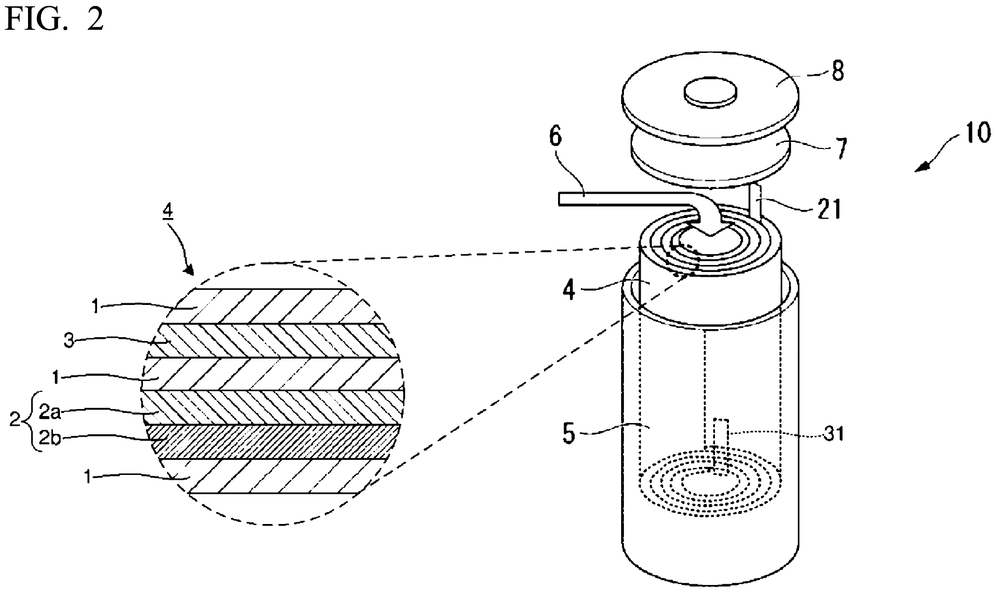

FIG. 2 is a schematic view showing an example of the lithium secondary battery. For example, a cylindrical lithium secondary battery 10 is manufactured as described below.
First, as shown in a partially enlarged view of FIG. 2, a pair of separators 1 having a strip shape, a cathode 2 having a strip shape, in which a cathode lead 21 is installed at one end, and an anode 3 having a strip shape, in which an anode lead 31 is installed at one end, are provided. The laminate is wound in which the separator 1, the cathode 2, the separator 1, and the anode 3 are laminated in this order, thereby producing an electrode group 4.
The cathode 2 includes, for example, a cathode active material layer 2a containing the LiMO and a cathode current collector 2b having the cathode active material layer 2a formed on one surface thereof. The cathode 2 can be produced by first preparing a cathode mixture containing the LiMO, a conductive material, and a binder, and supporting the cathode mixture on one surface of the cathode current collector 2b to form a cathode active material layer 2a.
As an example of the anode 3, an electrode in which an anode material mixture containing an anode active material (not shown) is supported on an anode current collector, and an electrode consisting of an anode active material alone are exemplary examples, and the anode 3 can be produced in a manner similar to that for the cathode 2.
Next, the electrode group 4 and an insulator (not shown) are accommodated in a battery can 5, and then a can bottom of the battery can 5 is sealed. The electrode group 4 is impregnated with an electrolytic solution 6 in the battery can 5 to interpose an electrolyte (not shown) between the cathode 2 and the anode 3. Thereafter, a top insulator 7 and a sealing body 8 seal the upper part of the battery can 5. **In** this manner, a lithium secondary battery 10 is completed.
Examples of a shape of the electrode group 4 include a columnar shape in which the cross-sectional shape is a circle, an ellipse, a rectangle, or a rectangle with rounded corners, in a case where the electrode group 4 is cut in a direction perpendicular to a winding axis.
In addition, as the shape of the lithium secondary battery having such an electrode group 4, a shape that is specified by IEC60086, which is a standard specified by the International Electrotechnical Commission (IEC) or by JIS C 8500, can be adopted. Examples thereof include shapes such as a cylindrical shape and a square shape.
Furthermore, the lithium secondary battery is not limited to the above-described winding-type configuration, and may have a lamination-type configuration of a laminated structure in which the cathode, the separator, the anode, and the separator are repeatedly stacked. As the lamination-type lithium secondary battery, a so-called coin-type battery, button-type battery, or paper-type (or sheet-type) battery can be exemplary examples.
For the cathode, the separator, the anode, and the electrolytic solution constituting the lithium secondary battery, for example, the configurations, materials, and production methods described in [0113] to [0140] of WO2022/113904A1 can be used.

[E] All-solid-state lithium secondary battery

The LiMO according to the present embodiment can be used as a CAM of an all-solid-state lithium secondary battery.

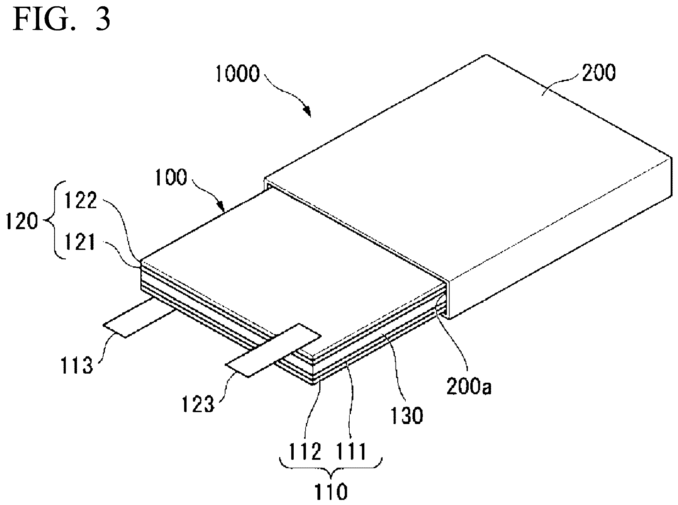

FIG. 3 is a schematic view showing an example of the all-solid-state lithium secondary battery.

An all-solid-state lithium secondary battery 1000 shown in FIG. 3 includes a laminate 100 having a cathode 110, an anode 120, and a solid electrolyte layer 130, and an exterior body 200 accommodating the laminate 100. The all-solid-state lithium secondary battery 1000 may have a bipolar structure in which the LiMO and an anode active material are disposed on both sides of a current collector. Specific examples of the bipolar structure include structures described in JP-A-2004-95400.

The cathode 110 has a cathode active material layer 111 and a cathode current collector 112. The cathode active material layer 111 contains the above-described LiMO and a solid electrolyte. In addition, the cathode active material layer 111 may contain a conductive material and a binder.

The anode 120 has an anode active material layer 121 and the anode current collector 122. The anode active material layer 121 contains an anode active material. In addition, the anode active material layer 121 may contain a solid electrolyte and a conductive material.

The laminate 100 may have an external terminal 113 which is connected to a cathode current collector 112 and an external terminal 123 which is connected to an anode current collector 122. In addition, the all-solid-state lithium secondary battery 1000 may have a separator between the cathode 110 and the anode 120.

The all-solid-state lithium secondary battery 1000 further includes an insulator (not shown) which insulates the laminate 100 and the exterior body 200 from each other, and a sealant (not shown) which seals an opening portion 200a of the exterior body 200.

The exterior body 200 is a container formed of a highly corrosion-resistant metal material such as aluminum, stainless steel or nickel-plated steel. **In** addition, the exterior body 200 may be a container obtained by processing a laminate film having at least one surface on which a corrosion resistant process has been carried out into a bag shape.

Examples of a shape of the all-solid-state lithium secondary battery 1000 include a coin type, a button type, a paper type (or a sheet type), a cylindrical type, a square type, and a laminate type (pouch type).

The all-solid-state lithium secondary battery 1000 has a form in which one laminate 100 is provided, but the present invention is not limited thereto. The all-solid-state lithium secondary battery 1000 may have a configuration in which the laminate 100 is used as a unit cell and a plurality of unit cells (laminates 100) is sealed inside the exterior body 200.

For the all-solid-state lithium secondary battery, for example, the configurations, materials, and production methods described in [0151] to [0181] of WO2022/113904A1 can be used.

Examples

Examples and comparative examples will be described below with reference to Table 1. In Table 1, (Example 1) to (Example 3) correspond to Examples, and (Comparative Example C1) and (Comparative Example C2) correspond to Comparative Examples.

[Table 1]

| | | (Example 1) | (Example 2) | (Example 3) | (Example C1) | (Example C2) |
|---|---|---|---|---|---|---|
| Manufacturing conditions | MCC | [Ni]:[Mn]:[Al] | [Ni]:[Mn]:[Al] | [Ni]:[Mn]:[Al] | [Ni]:[Mn]:[Al] | [Ni]:[Mn]:[Al] |
| | | 93:3.5:3.5 | 93:1:6 | 93:2:5 | 93:3.5:3.5 | 93:1:6 |
| | FS2/FS1 (m) | 6.62 | 3.20 | 5.51 | 11.2 | 0.92 |
| Composition of LiMO | $\alpha$ | 0 | -0.02 | 0.05 | 0 | -0.01 |
| | x | 0.07 | 0.07 | 0.07 | 0.07 | 0.07 |
| | y | 0 | 0 | 0 | 0 | 0 |
| | x+y | 0.07 | 0.07 | 0.07 | 0.07 | 0.07 |
| | Substance amount of Co (% by mole) | 0 | 0 | 0 | 0 | 0 |

(continued)

| | | | (Example 1) | (Example 2) | (Example 3) | (Example C1) | (Example C2) |
|---|---|---|---|---|---|---|---|
| Pore characteristics of LiMO | Pore volume fraction | $100 \cdot V1/(V1 + V2 + V3)$ | 30 | 14 | 30 | 72 | 19 |
| | | $100 \cdot V3/(V1 + V2 + V3)$ | 6 | 7 | 12 | 4 | 19 |
| | Average pore size Adp (nm) | | 23.1 | 28.7 | 21.5 | 21.3 | 22.5 |
| | Pore volume VP ($cm^3$/g) | | 0.006 | 0.008 | 0.006 | 0.006 | 0.007 |
| Other characteristics of LiMO | Metal site occupancy factor SR (%) | | 3.4 | 3.3 | 2.6 | 4.4 | 2.0 |
| | Average crystallite size AK (nm) | | 112.6 | 120.6 | 112.3 | 87 | 96.7 |
| | BET specific surface area BS ($m^2$/g) | | 1.2 | 1.3 | 1.0 | 1.5 | 1.2 |
| Battery evaluation | Initial charge and discharge efficiency (%) | | 88.5 | 87.2 | 88.2 | 84.9 | 86.5 |

[1] Sample production

A procedure for producing a sample of the LiMO according to each example will be described in order. A BET specific surface area of a primary calcined product was measured according to the method described in (Method of measuring BET specific surface area) above.

(Example 1)

First, after water was poured into a reaction vessel equipped with a stirrer and an overflow pipe, a sodium hydroxide aqueous solution was added thereto, and the liquid temperature was retained at 70°C (temperature of the reaction vessel).

A mixed raw material solution 1 was prepared by mixing a nickel sulfate aqueous solution, a manganese sulfate aqueous solution, and an aluminum sulfate aqueous solution such that [Ni]:[Mn]:[Al] was the value shown in Table 1 (93:3.5:3.5 in (Example 1)).

Nitrogen gas was allowed to flow in the reaction vessel, and an ammonium sulfate aqueous solution was continuously added thereto as a complexing agent in a state in which the mixed raw material solution 1 was stirred. A sodium hydroxide aqueous solution was added dropwise thereto at appropriate times so that the pH of the mixed solution in the reaction vessel reached 11.4 (measurement temperature: 40°C) to obtain a reaction precipitate 1.

The reaction precipitate 1 was washed with a 5% by mass sodium hydroxide aqueous solution. In the washing of the reaction precipitate 1, a sodium hydroxide aqueous solution of 20 times the mass of the reaction precipitate 1 was used. The washed reaction precipitate 1 was dewatered using a centrifuge, washed with water, and further dewatered to isolate the reaction precipitate 1. The isolated reaction precipitate 1 was dried under the conditions of 105°C and 20 hours to obtain a metal composite hydroxide 1 containing Ni, Mn, and Al.

The metal composite hydroxide 1 was oxidized under the conditions of 650°C and 5 hours in an atmospheric atmosphere to obtain MCC 1 which is a metal composite oxide.

Next, a powder of lithium hydroxide monohydrate prepared as a lithium compound and the powder of the MCC 1 were mixed with each other to obtain a mixture 1. Here, the lithium hydroxide monohydrate and the MCC 1 were mixed at a proportion at which the amount (mole ratio) of Li contained in the lithium hydroxide monohydrate with respect to the total amount 1 of Ni, Mn, and Al contained in the MCC 1 was 1.05, thereby obtaining the mixture 1.

The mixture 1 was subjected to primary calcining under the conditions of an oxygen atmosphere, a retention temperature of 650°C, and a retention time of 5 hours to obtain a primary calcined product 1.

Next, the primary calcined product 1 was subjected to secondary calcining under the conditions of an oxygen atmosphere, a temperature rising rate of 300 °C/hour, a retention temperature of 750°C, and a retention time of 5 hours. The secondary calcining was carried out in a state of supplying oxygen gas. In this case, the oxygen flow rate F2 during the secondary calcining (during temperature rising and retention) was 3.0 L/min.

In addition, at this time, a value (FS2/FS1) obtained by dividing FS2 by the BET specific surface area FS1 of the primary calcined product 1 was 6.62 (m).

A slurry was produced by mixing the obtained calcined product 1 and pure water (liquid temperature: 5°C). The slurry was produced to contain 50% by mass of the calcined product 1. The slurry was stirred for 20 minutes. The calcined product 1 was dried under the conditions of a nitrogen atmosphere, 210°C, and 10 hours.

As a result, a sample of LiMO1 composed of the composition ($\alpha$, x, y) shown in Table 1 was obtained.

(Example 2)

A sample was produced in the same manner as in (Example 1), except that a nickel sulfate aqueous solution, a manganese sulfate aqueous solution, and an aluminum sulfate aqueous solution were added and mixed such that [Ni]:[Mn]:[Al] was the value shown in Table 1, a sodium hydroxide aqueous solution was appropriately added dropwise thereto such that the pH of the mixed solution in the reaction vessel was 11.0 (measurement temperature: 40°C), and the secondary calcining was carried out under the conditions of FS2/FS1 shown in Table 1. As a result, a sample of LiMO2 composed of the composition ($\alpha$, x, y) shown in Table 1 was obtained.

(Example 3)

A sample was produced in the same manner as in (Example 1), except that a nickel sulfate aqueous solution, a manganese sulfate aqueous solution, and an aluminum sulfate aqueous solution were added and mixed such that [Ni]:[Mn]:[Al] was the value shown in Table 1, a sodium hydroxide aqueous solution was appropriately added dropwise thereto such that the pH of the mixed solution in the reaction vessel was 11.2 (measurement temperature: 40°C), and the secondary calcining was carried out under the conditions of FS2/FS1 shown in Table 1. As a result, a sample of LiMO3 composed of the composition ($\alpha$, x, y) shown in Table 1 was obtained.

(Example C1)

A sample was produced in the same manner as in (Example 1), except that a sodium hydroxide aqueous solution was appropriately added dropwise thereto such that the pH of the mixed solution in the reaction vessel was 12.2 (measurement temperature: 40°C), and the secondary calcining was carried out under the conditions of FS2/FS1 shown in Table 1. As a result, a sample of LiMO4 composed of the composition ($\alpha$, x, y) shown in Table 1 was obtained.

(Example C2)

A sample was produced in the same manner as in (Example 1), except that a nickel sulfate aqueous solution, a manganese sulfate aqueous solution, and an aluminum sulfate aqueous solution were added and mixed such that [Ni]:[Mn]:[Al] was the value shown in Table 1, and the secondary calcining was carried out under the conditions of FS2/FS1 shown in Table 1. As a result, a sample of LiMO5 of each of Examples, composed of the composition ($\alpha$, x, y) shown in Table 1, was obtained.

[2] Characteristics of sample

The characteristics of the sample of the LiMO produced for each of Examples as described above were obtained. The results are shown in Table 1.

[2-1] Composition of LiMO

The composition of the LiMO was measured according to the method described in (Method of measuring composition) above. In addition, the substance amount of Co with respect to the total amount of Ni and the element M was calculated by (Expression II) described above.

[2-2] Pore characteristics of LiMO

As shown in Table 1, as the pore characteristics of the LiMO, the pore volume fraction, Adp, and VP were obtained according to the method described in (Method of measuring pore volume fraction) above.

[2-3] Other characteristics of LiMO

As shown in Table 1, as the other characteristics of the LiMO in each of Examples, the SR and AK were obtained according to the method described in (Method of measuring metal site occupancy factor and average crystallite size) above. In addition, BS was obtained according to the method described in (Method of measuring BET specific surface area).

[3] Evaluation of battery

As described above, battery evaluation was carried out for the sample of the LiMO produced in each example as shown in Table 1. The battery evaluation was performed according to the method described in "[C] Battery evaluation" above.

[4] Summary

\The results of each of Examples will be described.

[4-1] Regarding (Example 1) to (Example 3)

In (Example 1) to (Example 3), as shown in Table 1, the composition of LiMO satisfied the relationships represented by (Expression Ia), (Expression Ib), (Expression Ic), (Expression Id), and (Expression Id_1).
In addition, the LiMO in (Example 1) to (Example 3) satisfied the relationships represented by (Expression A1) and (Expression A2). Furthermore, the LiMO in (Example 1) to (Example 3) satisfied the relationships represented by (Expression B), (Expression C), (Expression D), (Expression E), and (Expression F).
As a result, in the lithium secondary battery of (Example 1) to (Example 3), as shown in Table 1, the initial charge and discharge efficiency was 87% or more, and suitable results were obtained.

[4-2] Regarding results of (Example C1) and (Example C2)

In (Example C1) and (Example C2), as shown in Table 1, the composition of LiMO satisfied the relationships represented by (Expression Ia), (Expression Ib), (Expression Ic), (Expression Id), and (Expression Id_1). In addition, the LiMO in (Example C1) and (Example C2) satisfied the relationships represented by (Expression B), (Expression C), (Expression D), (Expression E), and (Expression F).
However, the LiMO in (Example C1) did not satisfy the relationship represented by (Expression A1). The LiMO in (Example C2) did not satisfy the relationship represented by (Expression A2).
Therefore, in the lithium secondary battery of (Example C1) and (Example C2), as shown in Table 1, the initial charge and discharge efficiency was less than 87%.

INDUSTRIAL APPLICABILITY

According to the present invention, it is possible to provide LiMO, CAM, a cathode for lithium secondary battery, and a lithium secondary battery capable of improving an initial charge and discharge efficiency.

REFERENCE SIGNS LIST

1: Separator
2: Cathode
2a: Cathode active material layer
2b: Cathode current collector
3: Anode
4: Electrode group
5: Battery can
6: Electrolytic solution
7: Top insulator
8: Sealing body
10: Lithium secondary battery

21: Cathode lead
31: Anode lead
100: Laminate
110: Cathode
111: Cathode active material layer
112: Cathode current collector
113: External terminal
120: Anode
121: Anode active material layer
122: Anode current collector
123: External terminal
130: Solid electrolyte layer
200: Exterior body
200a: Opening portion
1000: All-solid-state lithium secondary battery

**Claims**

1. A lithium metal composite oxide comprising:

   Li;
   Ni; and
   an element M,
   wherein the element M is at least one element selected from the group consisting of Co, Mn, Fe, Cu, Ti, Mg, Ca, Al, Zn, Sn, Zr, B, Si, Nb, W, Ta, Ba, S and P,
   the lithium metal composite oxide has pores, and
   in a curve calculated by a Barrett-Joyner-Halenda method from a nitrogen-adsorption isotherm, in which a horizontal axis represents a ratio dp/dpm of a pore size dp to a maximum pore size dpm and a vertical axis represents a cumulative pore volume, the pores include first pores satisfying a relationship represented by $dp/dpm < 0.10$, second pores satisfying a relationship represented by $0.10 \leq dp/dpm \leq 0.65$, and third pores satisfying a relationship represented by $dp/dpm > 0.65$, and
   a volume V1 of the first pores, a volume V2 of the second pores, and a volume V3 of the third pores satisfy relationships represented by (Expression A1) and (Expression A2),

$$0 < 100 \cdot V1/(V1 + V2 + V3) \leq 70 \ ... \ \text{(Expression A1)},$$

$$0 < 100 \cdot V3/(V1 + V2 + V3) \leq 15 \ ... \ \text{(Expression A2)}.$$

2. The lithium metal composite oxide according to Claim 1,
   wherein the lithium metal composite oxide is represented by (Compositional Formula I), in (Compositional Formula I),

   M1 is at least one element selected from the group consisting of Mn, Al, and Co,
   M2 is at least one element selected from the group consisting of Fe, Cu, Ti, Mg, Ca, Zn, Sn, Zr, B, Si, Nb, W, Ta, Ba, S, and P, and
   relationships represented by (Expression Ia) to (Expression Id) are satisfied,

   $$\mathrm{Li[Li_{\alpha}(Ni_{(1-x-y)}M1_{x}M2_{y})_{1-\alpha}]O_{2}} \ ... \qquad \text{(Compositional Formula I)},$$

   $$-0.1 \leq \alpha \leq 0.2 \ ... \ \text{(Expression Ia)},$$

   $$0 \leq x \leq 0.5 \ ... \ \text{(Expression Ib)},$$

$$0 \le y \le 0.7 \dots \text{(Expression Ic)},$$

$$0 < x + y < 1 \dots \text{(Expression Id)}.$$

3. The lithium metal composite oxide according to Claim 1 or 2,
   wherein a substance amount of Co with respect to a total amount of Ni and the element M is 10% by mole or less.

4. The lithium metal composite oxide according to Claim 2,
   wherein, in (Compositional Formula I), a relationship represented by (Expression Id_1) is satisfied,

$$0 < x + y \le 0.15 \dots \text{(Expression Id\_1)}.$$

5. The lithium metal composite oxide according to Claim 1 or 2,
   wherein, in a pore size distribution calculated by the Barrett-Joyner-Halenda method from the nitrogen-adsorption isotherm, an average pore size Adp satisfies a relationship represented by (Expression B),

$$10\,\text{nm} \le \text{Adp} \le 40\,\text{nm} \dots \text{(Expression B)}.$$

6. The lithium metal composite oxide according to Claim 1 or 2,
   wherein, in a pore size distribution calculated by the Barrett-Joyner-Halenda method from the nitrogen-adsorption isotherm, a pore volume VP satisfies a relationship represented by (Expression C),

$$0.001\,\text{cm}^3/\text{g} \le \text{VP} \le 0.01\,\text{cm}^3/\text{g} \dots \text{(Expression C)}.$$

7. The lithium metal composite oxide according to Claim 1 or 2,
   wherein a metal site occupancy factor SR obtained from Rietveld analysis satisfies a relationship represented by (Expression D),

$$1.0\% \le \text{SR} \le 4.0\% \dots \text{(Expression D)}.$$

8. The lithium metal composite oxide according to Claim 1 or 2,
   wherein an average crystallite size AK obtained from Rietveld analysis satisfies a relationship represented by (Expression E),

$$80\,\text{nm} \le \text{AK} \le 200\,\text{nm} \dots \text{(Expression E)}.$$

9. The lithium metal composite oxide according to Claim 1 or 2,
   wherein a BET specific surface area BS satisfies a relationship represented by (Expression F),

$$0.2\,\text{m}^2/\text{g} \le \text{BS} \le 2.0\,\text{m}^2/\text{g} \dots \text{(Expression F)}.$$

10. A cathode active material for lithium secondary battery, comprising:
    the lithium metal composite oxide according to Claim 1 or 2.

11. A cathode for lithium secondary battery, comprising:
    the cathode active material for lithium secondary battery according to Claim 10.

12. A lithium secondary battery comprising:
    the cathode for lithium secondary battery according to Claim 11.

# FIG. 1

FIG. 2

FIG. 3

## INTERNATIONAL SEARCH REPORT

| | International application No. |
|---|---|
| | **PCT/JP2024/005464** |

| | |
|---|---|
| **A.** | **CLASSIFICATION OF SUBJECT MATTER** |

*C01G 53/00*(2006.01)i; *H01M 4/505*(2010.01)i; *H01M 4/525*(2010.01)i
FI: C01G53/00 A; H01M4/505; H01M4/525

According to International Patent Classification (IPC) or to both national classification and IPC

| | |
|---|---|
| **B.** | **FIELDS SEARCHED** |

Minimum documentation searched (classification system followed by classification symbols)

C01G53/00; H01M4/505; H01M4/525

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| A | WO 2017/135415 A1 (ASAHI GLASS CO., LTD.) 10 August 2017 (2017-08-10) entire text | 1-12 |
| A | JP 2022-189427 A (SUMITOMO CHEMICAL CO., LTD.) 22 December 2022 (2022-12-22) entire text | 1-12 |
| A | JP 2021-114412 A (SUMITOMO CHEMICAL CO., LTD.) 05 August 2021 (2021-08-05) entire text | 1-12 |
| A | JP 2022-081251 A (SUMITOMO CHEMICAL CO., LTD.) 31 May 2022 (2022-05-31) entire text | 1-12 |
| A | JP 2020-064878 A (HITACHI METALS, LTD.) 23 April 2020 (2020-04-23) entire text | 1-12 |

☐ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **01 May 2024** | **14 May 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2024/005464**

| Patent document cited in search report | | | Publication date (day/month/year) | Patent family member(s) | | | Publication date (day/month/year) |
|---|---|---|---|---|---|---|---|
| WO | 2017/135415 | A1 | 10 August 2017 | US entire text | 2019/0044139 | A1 | |
| | | | | EP | 3412634 | A1 | |
| | | | | KR | 10-2018-0111807 | A | |
| | | | | CN | 109071264 | A | |
| JP | 2022-189427 | A | 22 December 2022 | WO | 2022/260072 | A1 | |
| JP | 2021-114412 | A | 05 August 2021 | US entire text | 2023/0052234 | A1 | |
| | | | | WO entire text | 2021/145420 | A1 | |
| | | | | EP | 4092783 | A1 | |
| | | | | CN | 114982016 | A | |
| | | | | KR | 10-2022-0127253 | A | |
| JP | 2022-081251 | A | 31 May 2022 | US entire text | 2024/0030430 | A1 | |
| | | | | WO entire text | 2022/107861 | A1 | |
| | | | | EP | 4249437 | A1 | |
| | | | | CN | 116490468 | A | |
| | | | | KR | 10-2023-0108268 | A | |
| JP | 2020-064878 | A | 23 April 2020 | US entire text | 2021/0126237 | A1 | |
| | | | | WO entire text | 2019/103046 | A1 | |
| | | | | KR | 10-2020-0033899 | A | |
| | | | | CN | 111052464 | A | |
| | | | | KR | 10-2022-0025103 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020145189 A
- JP 2002201028 A
- WO 2019177032 A1
- WO 2022113904 A1
- JP 2004095400 A